# EUROPÄISCHE PATENTSCHRIFT

(11) **EP 3 663 065 B1**
(45) Veröffentlichungstag und Bekanntmachung des Hinweises auf die Patenterteilung: **06.07.2022**
(21) Anmeldenummer: 19202463.6
(22) Anmeldetag: 10.10.2019
(51) Int. Cl.: B29C 44/08, B29C 44/12, B29C 44/14, B32B 3/04, B32B 3/06, B32B 5/02, B29C 44/06, B32B 27/06

(54) **VERFAHREN ZUR HERSTELLUNG EINES DÄMMELEMENTS FÜR DIE HERSTELLUNG VON RAHMENTEILEN**
METHOD FOR PRODUCING AN INSULATING ELEMENT FOR THE PRODUCTION OF FRAME SECTIONS
PROCÉDÉ DE FABRICATION D'UN ÉLÉMENT ISOLANT POUR LA FABRICATION DE PARTIES DE CADRE

(30) Priorität: 04.12.2018 DE 102018130900; 22.03.2019 DE 102019107404
(43) Veröffentlichungstag der Anmeldung: 10.06.2020
(73) Patentinhaber: Knaus Tabbert AG, 94118 Jandelsbrunn (DE)
(72) Erfinder: Wojczenko, Nikolaj, 94169 Thurmansbang (DE); Kornexl, Christian, 94133 Röhrnbach (DE)
(74) Vertreter: advotec.

(56) Entgegenhaltungen:
- EP-A1- 3 031 592
- EP-A1- 3 446 848
- DE-A1-102013 006 300
- US-A- 5 173 227
- US-A1- 2002 054 989

## Beschreibung

Die vorliegende Erfindung betrifft ein Verfahren zur Herstellung eines Dämmelements für die Herstellung von Rahmenteilen, umfassend folgende Schritte:
a) Bereitstellen eines zumindest zweiteiligen öffen- und schließbaren Formwerkzeugs mit mindestens einem ersten Formteil und einem zweiten Formteil, welche Formteile im geschlossenen Zustand des Formwerkzeugs einen Hohlraum bilden und die dreidimensionale Außenform des Dämmelements wiedergeben, wobei die Formteile im geschlossenen Zustand des Formwerkzeugs miteinander verbunden und im geöffneten Zustand des Formwerkzeugs zumindest teilweise voneinander getrennt sind;
b) Anordnen mindestens eines flächenartigen Verstärkungselements am ersten Formteil und mindestens eines flächenartigen Verstärkungselements am zweiten Formteil, wobei sich die flächenartigen Verstärkungselemente im geschlossenen Zustand des Formwerkzeugs im von den Formteilen gebildeten Hohlraum befinden;
c) Einbringen einer fließfähigen, aushärtbaren Kunststoffmasse in den durch die Formteile des Formwerkzeugs gebildeten Hohlraum;
d) Härtenlassen der Kunststoffmasse im Formwerkzeug;
e) Öffnen des Formwerkzeugs und Entnehmen des so gebildeten Dämmelements;
f) Anordnen von Abstandshaltern am Dämmelement;
g) Einlegen des Dämmelements in ein öffen- und schließbares Schäumwerkzeug, wobei die gesamte Oberfläche des Dämmelements durch die von ihm abragenden Abstandshalter von Formflächen des Schäumwerkzeuges beabstandet gehalten wird;
h) Umfluten des Dämmelements im geschlossenen Schäumwerkzeug mit einer aushärtbaren Kunststoffmasse;
i) Aushärtenlassen der Kunststoffmasse im Schäumwerkzeug;
j) Öffnen des Schäumwerkzeugs und Entnehmen des nun ummantelten Dämmelements.

US 5 173 227 A beschreibt ein Verfahren mit den oben genannten Verfahrensschritten a) bis d). Ein Verfahren mit sämtlichen Verfahrensschritten a) bis j) ist aus der Druckschrift DE 10 2017 119 382 der Anmelderin bekannt. Die Verfahrensschritte f) bis j) sind aus der DE 10 2013 006 300 A1 bekannt.

Mit den genannten, aus dem Stand der Technik bekannten Verfahren lassen sich ummantelte Dämmelemente mit komplettem Polyurethan-Schaumkem, welcher keine Fehlstellen zeigt, herstellen. Mit einem derartigen Kunststoff-Mantel wird eine hohe Steifigkeit bei geringem Gewicht erreicht. Der Mantel (Außenschicht) ist vollständig geschlossen und ein sich Abzeichnen von Verstärkungselementen auf der Oberfläche des Dämmelements ist so gut wie ausgeschlossen.

Allerdings birgt das genannte Verfahren aus dem Stand der Technik auch einen Nachteil. So werden beim bekannten Verfahren die Formflächen des Schäumwerkzeuges vor dem Arbeitsschritt g) mit einem In-Mould-Lack beschichtet. Bei dieser sog. In-Mould-Lackierung geht der Lack eine stoffschlüssige Verbindung mit der Kunststoff-Masse ein. Hierdurch soll eine UV-stabile, hochglänzende Oberfläche des fertigen Dämmelements erzielt werden. Mit dieser Vorgehensweise wird ein sich anschließender Lackierungsprozess eingespart.

Allerdings kommt es beim Einlegen des Schaumkerns in das öffen- und schließbare Schäumwerkzeug häufig zu Verletzungen der Lackschicht. So kann die Lackschicht leicht durch die Abstandshalter auf- bzw. angekratzt werden. Des Weiteren können krumme oder verzogene Schaumkerne beim Einlegen und/oder dem anschließenden Schließen des Schäumwerkzeuges die Werkzeugoberfläche berühren und so die Lackschicht verletzen. Auch reißt die Lackschicht häufig bei Betätigungen von Schieberfunktionen auf. Um dies zu vermeiden, muss zusätzlich mit Trennmittel gearbeitet werden. Ein Trennmitteleinsatz ist jedoch oft mit einem Glanzgradverlust der Bauteiloberfläche verbunden. Ein weiterer Nachteil der In-Mould-Lackschicht besteht darin, dass sich häufig eine runzlige, an Orangenhaut erinnernde Oberfläche ausbildet. Aufgrund der obigen Widrigkeiten werden häufig auch Flecken beim In-Mould-Lack generiert. Selbst wenn die Lackschicht nicht bereits beim Herstellungsprozess des erfindungsgemäßen Dämmelements beschädigt wird, so wird sie häufig anschließend durch mechanische Einwirkungen verletzt. Dies ist insbesondere der Tatsache zuzuschreiben, dass die im In-Mould-Verfahren hergestellte Lackschicht eine äußerst geringe Dicke (wenige µm) aufweist.

EP 3031592 A1 offenbart eine Dämmplatte, umfassend ein erstes Material sowie ein mit dem ersten Material verbundenen zweiten Material. Das zweite Material kann mit einer Folie verbunden und aus Polyurethan gefertigt sein.

Der vorliegenden Erfindung liegt die Aufgabe zugrunde, die oben beschriebenen Nachteile des Verfahrens aus dem Stand der Technik zu überwinden.

Diese Aufgabe wird erfindungsgemäß durch ein Verfahren der eingangs genannten Art gelöst, welches dadurch gekennzeichnet ist, dass es sich bei der aushärtbaren Kunststoffmasse um eine mindestens einen Farbstoff enthaltende, im Wesentlichen UV-stabile Kunststoffmasse handelt.

Durch die Tatsache, dass das Umflutungsmaterial, welches im Verfahrensschritt h) eingesetzt wird, bereits mit der gewünschten Farbe eingefärbt ist und die Kunststoffmasse gegen UV-Strahlung stabil ist, kann auf den Arbeitsgang eines In-Mould-Coatings, also eines Lackierens ins offene Werkzeug, gänzlich verzichtet werden, da mit dem erfindungsgemäßen Verfahren ein Dämmelement hergestellt werden kann, welches im Arbeitsschritt h) nicht nur eine UV-stabile Kunststoffschale, sondern gleichzeitig eine entsprechende Einfärbung erhält. Die Schale ist damit so gut wie resistent gegen UV-Strahlung. Des Weiteren wird die Gefahr einer mechanischen Verletzung (z.B. Verkratzen) weitgehend vermieden, da der erzeugte Kunststoff-Farbstoff-Mantel mit einer wesentlich höheren Dicke generiert werden kann als dies bei einer herkömmlichen Lackschicht der Fall ist. So wird die Schicht aus der mindestens einen Farbstoff enthaltenden aushärtbaren Kunststoffmasse mit einer Schichtdicke von vorzugsweise mindestens 3 mm im Verfahrensschritt h) um das Dämmelement herum angeordnet.

Bei einer besonders bevorzugten Variante des erfindungsgemäßen Verfahrens handelt es sich bei der im Verfahrensschritt h) eingesetzten aushärtbaren Kunststoffmasse um eine nicht-aromatische und/oder aliphatische Kunststoffmasse, insbesondere um ein aliphatisches Polyurethan, welches vorzugsweise eine Dichte von ca. 800 bis 1.200, besonders bevorzugt von ca. 1.000 kg/m³ aufweist. Unter dem Begriff "aliphatisch" wird vorliegend "azyklisch" verstanden. Bei einem aliphatischen Polyurethan sind also die Ausgangskomponenten, nämlich die Polyol-Komponente und die Isocyanat-Komponente aus geraden und/oder verzweigten Molekülketten ohne Ringstrukturen aufgebaut.

Mit Vorteil erfährt die im Verfahrensschritt h) eingesetzte aushärtbare Kunststoffmasse durch UV-Strahlung gemäß Prüfnorm PV 3930 lediglich einen Farbabstand ΔE≤1. Mit einer derartigen Kunststoffmasse kann ein äußerst farbstabiles Dämmelement zur Herstellung von Rahmenteilen zur Verfügung gestellt werden.

Mit Vorteil handelt es sich bei dem Farbstoff, welchen die aushärtbare Kunststoffmasse im Verfahrensschritt h) enthält, um Farbpigmente, insbesondere um Titandioxid oder um eine Farbmischung, welche vorzugsweise Titandioxid enthält. So hat sich herausgestellt, dass sich Titandioxid optimal homogen in der aushärtbaren Kunststoffinasse, insbesondere in aliphatischem Polyurethan verteilen lässt. Des Weiteren eignet sich Titandioxid hervorragend als Basisfarbstoff, wobei durch Zugabe weiterer Farbstoffe unterschiedlichste Farbtöne generiert werden können. Wird beispielsweise ein Grauton gewünscht, wird in der Regel Titandioxid als Basis mit der gewünschten Menge an Schwarzruß verwendet.

Bei einer besonders bevorzugten Verfahrensvariante wird bzw. werden die aushärtbare Kunststoffmasse oder Komponenten der aushärtbaren Kunststoffmasse, wie z.B. Polyol und/oder Isocyanat, erst kurz vor dem Verfahrensschritt h) mit dem Farbstoff, insbesondere mit dem Farbpigment gemischt und unmittelbar danach in das geschlossene Schäumwerkzeug zum Umfluten des Dämmelements eingebracht. Auf diese Art und Weise kann das erfindungsgemäße Verfahren äußerst flexibel hinsichtlich gewünschter Farbtöne gestaltet werden.

Mit Vorteil handelt es sich bei der aushärtbaren Kunststoffmasse um Polyurethan, wobei die Polyol-Komponente und die Isocyanat-Komponente zur Herstellung des Polyurethans vor dem Verfahrensschritt h) in einem Mischkopf, insbesondere in einem Dreikomponenten-Mischkopf, gemischt werden, wobei die Polyol-Komponente bereits mit der gewünschten Menge und der gewünschten Art von Farbstoff eingefärbt ist oder die Polyol-Komponente lediglich vorgefärbt ist und mit weiterem Farbstoff in einer Mischkammer gemischt wird, bevor das endgültig eingefärbte Polyol im Mischkopf mit der Isocyanat-Komponente gemischt wird, oder die ungefärbte Polyol-Komponente, der gewünschte Farbstoff und die Isocyanat-Komponente zusammen im Mischkopf gemischt werden.

Mit Vorteil weisen auch die Abstandshalter denselben Farbton des Farbstoffes auf, welcher auch der aushärtbaren Kunststoffmasse zugesetzt wird.

Dadurch wird erreicht, dass sich die Abstandshalter im fertigen Dämmelement nicht vom übrigen Material desselben abheben.

In der Regel handelt es sich bei den flächenartigen Verstärkungselementen um Matten, Gewebe oder Gewirke, wobei diese vorzugsweise aus Glasfasern gefertigt sind. In der Regel handelt es sich bei den flächenartigen Verstärkungselementen (Glasfasennatten) um solche mit einem Gewicht von ca. 240 - 360 g/m².

Mit Vorteil handelt es sich bei der fließfähigen aushärtbaren Kunststoffmasse um Polyurethan, insbesondere um Polyurethan mit einer Schaumdichte von ca. 50 - 150 kg/m³, vorzugsweise ca. 70 kg/m³, wobei der fertige Polyurethan-Schaum vorzugsweise einen mit expandiertem Polystyrol (z.B. Styropor^{®}) vergleichbaren U-Wert aufweist. Insbesondere mit einem Polyurethan mit der genannten Schaumdichte können Dämmelemente mit hoher Steifigkeit und zugleich mit besonders geringem Gewicht hergestellt werden.

Bei einer bevorzugten Variante des erfindungsgemäßen Verfahrens werden die Abstandshalter in Schritt f) auf einen Randbereich des Dämmelements aufgesteckt, ohne in das Dämmelement einzudringen, wobei die Abstandshalter vorzugsweise als Klammern mit zwei flexiblen Klammerschenkeln und einem die Klammerschenkel verbindenden Verbindungsabschnitt ausgebildet sind, wobei mindestens einer der beiden Klammerschenkel auf seiner Außenseite ein Beabstandungselement, vorzugsweise in Form einer Ausbuchtung oder Rippe aufweist, wobei vorzugsweise auch der Verbindungsabschnitt ein solches Beabstandungselement aufweist. Mit derartigen Abstandshaltern ist es in idealer Weise möglich, einen Abstand zwischen dem Dämmelement und dem Schäumwerkzeug beim Einlegen herzustellen, um das Dämmelement umfluten zu können. Hierbei muss nicht in das Dämmelement eingestochen werden; es müssen lediglich die Abstandshalter auf einen Randbereich des Dämmelements aufgesteckt werden (z.B. aufgeklipst). Sind auf beiden Klammerschenkeln sowie auch am Verbindungsabschnitt der als Klammern ausgebildeten Abstandshalter die o.g. Beabstandungselemente angeordnet, so werden drei Fixierungsstellen im Schäumwerkzeug erhalten (x-y-z). Ein weiterer Vorteil solcher Abstandshalter besteht darin, dass die Klammerwirkung durch das Schließen des Schäumwerkzeuges noch verstärkt werden kann. Zudem ist ein äußerst schnelles Anbringen solcher Abstandshalter am Dämmelement möglich.

Vorzugsweise enthält das öffen- und schließbare Schäumwerkzeug (10) eine Abdruckform, wobei die Abdruckform unlösbar am Schäumwerkzeug angeordnet sein kann oder lösbar mit diesem verbindbar sein kann.

Ferner beschrieben wird ein Dämmelement, insbesondere hergestellt durch ein erfindungsgemäßes Verfahren nach einem der Ansprüche 1 bis 13, umfassend einen Grundkörper aus härtbarem Kunststoff sowie mindestens zwei, in den härtbaren Kunststoff integrierten flächenartigen Verstärkungselementen, wobei es sich bei dem härtbaren Kunststoff vorzugsweise um Polyurethan, insbesondere um Polyurethan mit einer Schaumdichte von ca. 50 bis 150 kg, vorzugsweise 70 kg/m³ handelt, wobei das Polyurethan vorzugsweise einen mit expandiertem Polystyrol vergleichbaren U-Wert aufweist, dadurch gekennzeichnet, dass es einen Mantel aus einer aushärtbaren, UVstabilen Kunststoffmasse aufweist, wobei die aushärtbare Kunststoffinasse vorzugweise Polyurethan, insbesondere kompaktes Polyurethan mit einer Dichte von ca. 800 bis 1.200 kg, vorzugsweise 1.000 kg/m³ ist, wobei in der den Mantel bildenden Kunststoffmasse mindestens ein Farbstoff, insbesondere ein Farbpigment, wie z.B. TiO₂ enthalten, vorzugsweise homogen verteilt ist.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figuren 1 bis 6:: den schematischen Ablauf eines erfindungsgemäßen Vefahrens;
- Figuren 7a bis 7c:: ein beim erfindungsgemäßen Verfahren eingesetzter Abstandshalter;
- Figuren 8a bis 8c:: drei Varianten der Herstellung der in Verfahrensschritt h) eingesetzten Kunststoffmasse.

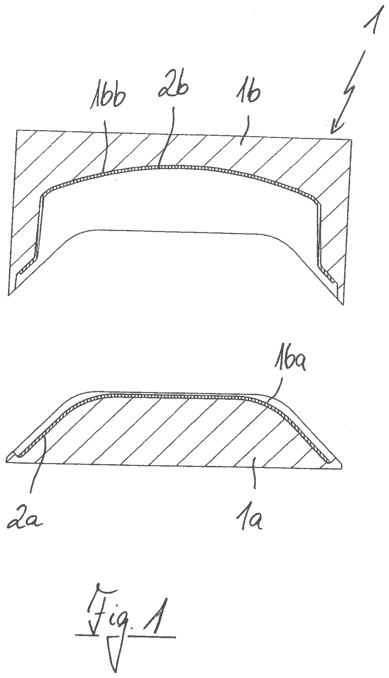

Anhand der Figuren 1 bis 6 soll nun eine bevorzugte Verfahrensvariante eines erfindungsgemäßen Verfahrens illustriert werden.

Wie in Figur 1 gezeigt ist, wird zunächst ein zweiteiliges, öffen- und schließbares Formwerkzeug 1 mit einem unteren Formteil 1a und einem oberen Formteil 1b bereitgestellt. Figur 1 zeigt das Formwerkzeug 1 im geöffneten Zustand, in dem die Formteile 1a und 1b voneinander getrennt sind.

In den Figuren 1 bis 3 ist das Formwerkzeug 1 und die Formteile 1a und 1b im Querschnitt dargestellt.

Zunächst werden die Formflächen 16a, 16b der Formteile 1a und 1b mit Trennmittel beschichtet (hier nicht dargestellt). Dann wird an die Formfläche 16a des unteren Formteils 1a eine Glasfasermatte 2a angeformt. Auch an die Formfläche 16b des oberen Formteils 1b wird eine Glasfasermatte 2b angeformt.

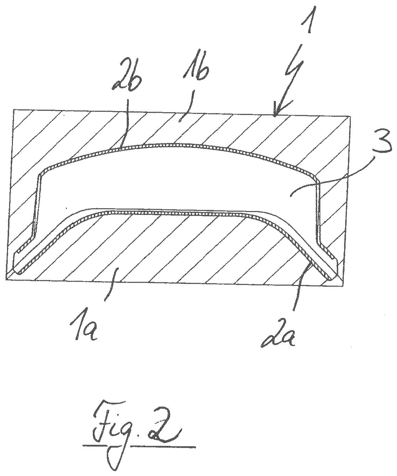

In einem nächsten Schritt wird das Formwerkzeug 1 geschlossen. Der geschlossene Zustand des Formwerkzeugs 1 ist in Figur 2 dargestellt. Im geschlossenen Zustand des Formwerkzeuges 1 bilden die Formteile 1a und 1b einen Hohlraum 3, wobei dieser Hohlraum die dreidimensionale Außenform des in einer ersten Stufe herzustellenden Dämmelements wiedergibt. Im geschlossenen Zustand des Formwerkzeuges sind die Formteile 1a und 1b miteinander verbunden. Im in Figur 2 gezeigten geschlossenen Zustand des Formwerkzeuges 1 befinden sich die Glasfasermatten 2a und 2b im Hohlraum 3, wobei die Glasfasermatten 2a und 2b voneinander beabstandet im Hohlraum 3 angeordnet sind und sich nicht berühren.

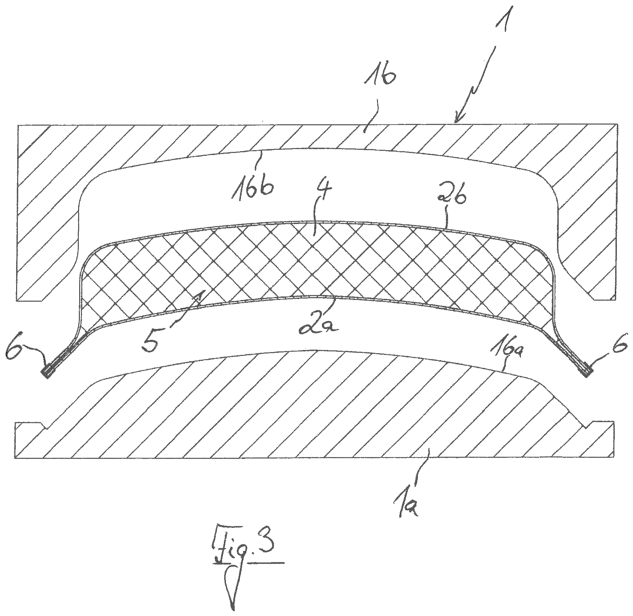

In einem nächsten Schritt wird eine fließfähige, aushärtbare Kunststoffmasse in Form von Polyurethan 4 mit einer Schaumdichte von ca. 70 kg/m³ in den Hohlraum 3 des Formwerkzeuges 1 eingebracht. Anschließend lässt man das zunächst fließfähige Polyurethan 4 im Hohlraum 3 aushärten. Nachdem das Polyurethan 4 ausgehärtet ist, wird das Formwerkzeug 1 durch Trennen der Formteile 1a und 1b geöffnet und das fertige Dämmelement 5 kann entnommen werden. Dies ist in Figur 3 dargestellt. Das Dämmelement 5 weist an seiner Oberfläche die beiden Glasfasermatten 2a und 2b auf, die getrennt voneinander vorliegen. Bei den Glasfasermatten handelt es sich im vorliegenden Beispiel um solche mit einem Gewicht von ca. 300 g/m².

Das Dämmelement 5 wird anschließend weiterbearbeitet, wobei sich nun folgende weitere Verfahrensschritte anschließen.

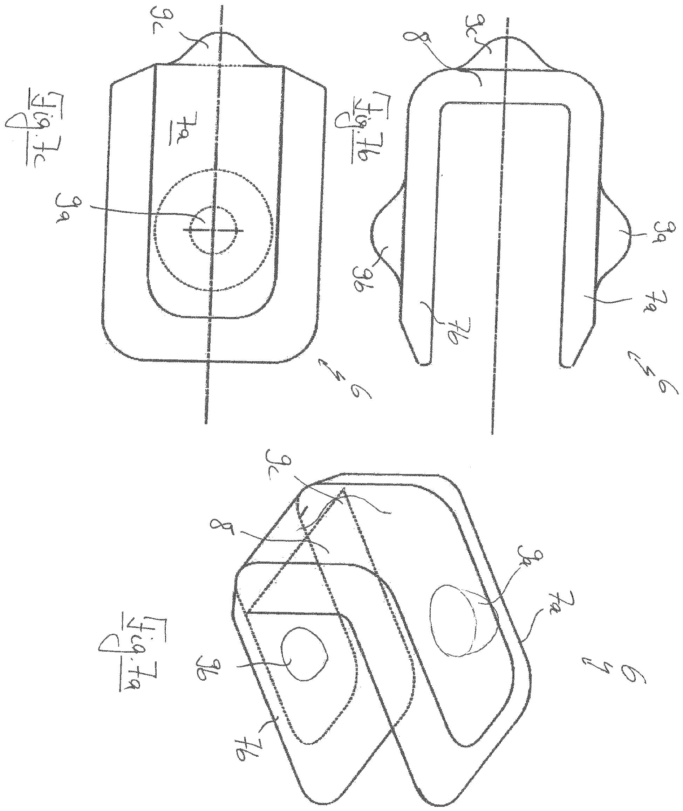

Zunächst wird das in Fig. 3 im Querschnitt dargestellte Dämmelement 5 mit Abstandshaltern in Form von Klammern 6 auf das Dämmelement aufgesteckt. Ein Beispiel eines derartigen Abstandshalters ist es in den Figuren 7a bis 7c dargestellt. Fig. 7a zeigt eine perspektivische Darstellung, Fig. 7b eine Seitenansicht und Fig. 7c eine Draufsicht. Die Fixierklammem 6 weisen zwei Klammerschenkel 7a, 7b und einen die Klammerschenkel 7a und 7b verbindenden Verbindungsabschnitt 8 auf. Die Fixierklammer 6 ist aus einem flexiblen Kunststoff gefertigt. Im vorliegenden Beispiel ist die Fixierklammer 6 aus Polypropylen gefertigt. An ihren jeweiligen Außenseiten weisen die Klammerschenkel 7a und 7b jeweils ein Beabstandungselement in Form einer Auswölbung 9a, 9b auf. Auch auf der Außenseite des Verbindungsabschnitts 8 befindet sich eine derartige Auswölbung 9c. Mit den Fixierklammem 6 wird in idealer Weise ein Abstand zwischen dem Schäumwerkzeug und dem zu ummantelnden Dämmelement geschaffen. Durch die Auswölbungen 9a, 9b und 9c wird zudem eine Fixierung in drei Richtungen möglich. Durch die entsprechende Wahl der Höhe der Auswölbungen 9a, 9b und 9c kann eine optimale Schichtdicke des Ummantelungsmaterials eingestellt werden. Bei einer Weiterbildung dieser Klammerschenkel ist es möglich, die Höhe der Auswölbungen durch Einbringung eines Fluids (z.B. Gel) zu steuern. Im Gegensatz zu den bisher verwendeten Fixierpins wird mit den gezeigten Fixierklammem ein Fixieren ohne ein Eindringen in das Dämmelement 5 möglich.

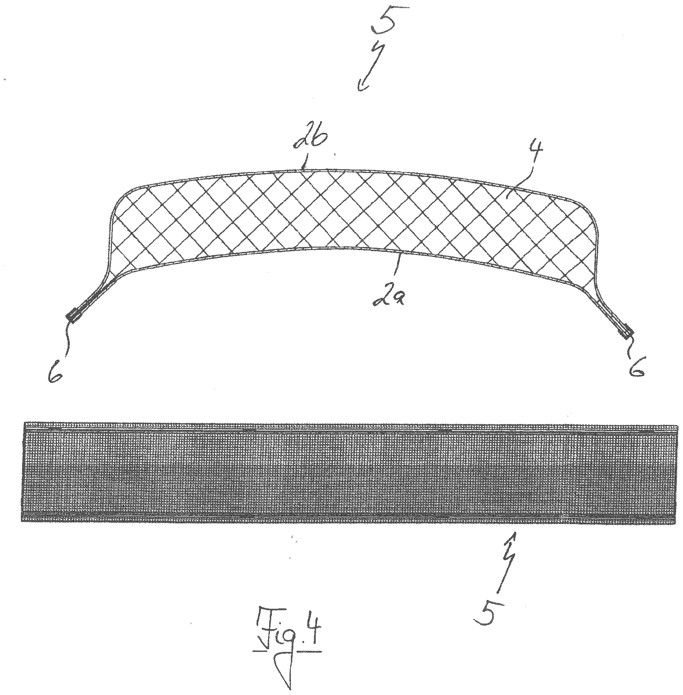

Auch Figur 4 zeigt noch einmal das Dämmelement 5 mit den Fixierklammern 6, wobei in einer oberen Darstellung das Dämmelement 5 im Querschnitt, in einer unteren Darstellung in einer Draufsicht dargestellt ist.

In einem nächsten Schritt wird nun das Dämmelement 5 mit den als Abstandshalter dienenden Fixierklammern 6 in ein Schäumwerkzeug 10 eingelegt. Auch das Schäumwerkzeug 10 umfasst - analog zum Formwerkzeug 1 - ein unteres Formteil 11a und ein oberes Formteil 11b. Die Formflächen 12 der Formteile 11a und 11b des Schäumwerkzeugs 10 weisen eine - hier nicht dargestellte - Einprägung eines Logos auf. Durch diese Einprägung kann in das Dämmelement in einfacher Art und Weise ein gewünschtes Logo eingebracht werden.

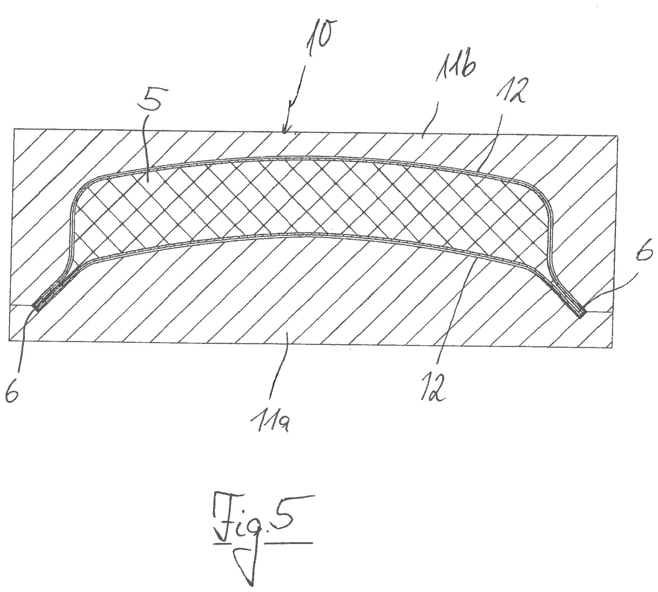

Die Formteile 11a und 11b sind im geöffneten Zustand des Schäumwerkzeugs 10 voneinander getrennt. In diesem Zustand wird auch das Dämmelement 5 in das Schäumwerkzeug 10 eingelegt. Anschließend wird das Formwerkzeug 10 geschlossen, indem die Formteile 11a und 11b miteinander verbunden werden. Dieser Zustand ist in Figur 5 dargestellt. Durch die Fixierklammern 6 wird die gesamte Oberfläche des Dämmelements 5 von den Formflächen 12 des Schäumwerkzeugs 10 beabstandet gehalten. Wie in Figur 5 gut zu erkennen ist, sind es insbesondere die Auswölbungen 9a bis 9c der Fixierklammern 6, die die Oberfläche des Dämmelements 5 von den Formflächen 12 des Schäumwerkzeugs 10 beabstandet halten, indem die Auswölbungen 9a bis 9c die Formflächen 12 des Schäumwerkzeugs 10 kontaktieren.

Im nächsten Schritt wird das Dämmelement 5 im geschlossenen Schäumwerkzeug 10 mit einem aliphatischen Polyurethan 14 mit einer Dichte von ca. 1.000 kg/m³ umflutet. Die Polyurethanmasse 14 enthält Titandioxid, welches im Polyurethan homogen verteilt ist. Auch die Abstandshalter 6 weisen den gleichen Farbton wie das Polyurethan 14 auf. Der Abstand zwischen dem zu ummantelnden Dämmelement 5 und dem Schäumwerkzeug 10 beträgt ca. 3 mm, sodass auch der in Verfahrensschritt h) erzeugte Mantel eine Schichtdicke von ca. 3 mm aufweist.

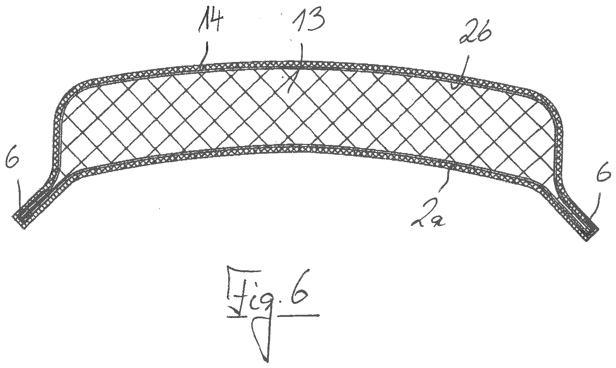

Anschließend lässt man das Polyurethan im Schäumwerkzeug aushärten. Danach wird das Schäumwerkzeug 10 durch Trennen der Formteile 11a und 11b geöffnet und das nun ummantelte Dämmelement 5 wird aus dem Schäumwerkzeug entnommen. Dieses Dämmelement 5 ist in Figur 6 dargestellt. Es umfasst nun einen Kern 13 aus leichtem Polyurethan mit zwei an der Peripherie des Kerns angeordneten Glasfasermatten. Dieser Kern ist von einem Mantel 14 aus aliphatischem, UV-stabilem Polyurethan und Titandioxid umgeben. Durch die Tatsache, dass zur Herstellung des Mantels 14 ein bereits im gewünschten Farbton eingefärbtes, UV-stabiles Polyurethan verwendet wird, kann auf einen Lackierungsschritt bzw. auf einen In-Mould-Lackierungsschritt gänzlich verzichtet werden.

Wie bereits in der Beschreibungseinleitung dargelegt, weist das mit dem oben beschriebenen Verfahren hergestellte Dämmelement verschiedene Vorteile auf. Durch den Schaumkern 13 mit integrierten Glasfasermatten 2a, 2b wird eine hohe Steifigkeit des Schaumkerns 13 erreicht. Durch das Ummanteln des Kerns 13 mit dem Mantel 14 wird eine hohe Steifigkeit des Gesamtelements bei geringem Gewicht erreicht. Zudem wird eine vollständig geschlossene Außenschicht erhalten. Zwischen dem Kern 13 und dem Mantel 14 besteht eine stoffschlüssige Verbindung.

Das Material des Kerns 13 hat vorzugsweise folgende technische Eigenschaften:
- Drucksteifigkeit 700 mPa +/- 150 mPa;
- Schwindverhalten 0,2 % +/- 0,1;
- Gewicht/Dichte 70 kg/m³ +/- 30 kg/m³.

Zu den technischen Eigenschaften des Mantelmaterials:
- Schwindverhalten 0,1 % +/- 0,2;
- Gewicht/Dichte 1.000 kg/m³ +/- 200 kg/m³;
- Viskosität der Einzelkomponenten ca. 1.000 mPa^{∗}s -500/+200 mPa^{∗}s.

Vorteilhaft ist es auch, dass sowohl das Kern- als auch das Mantelmaterial nicht brennbar oder zumindest flammhemmend eingestellt werden kann.

Bei dem oben dargestellten Dämmelement 5 handelt es sich vorliegend um die Hecksäule eines Reisemobils.

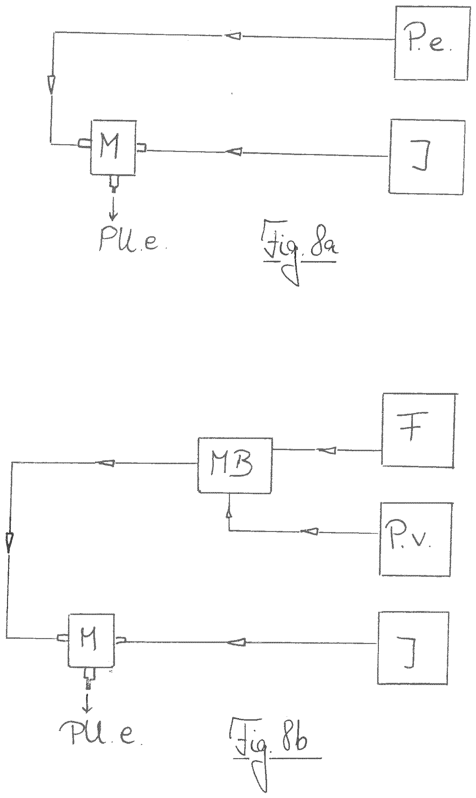

In den Figuren 8a bis 8c sind drei mögliche Varianten der Herstellung des Ummantelungsmaterials 14 dargestellt, bevor dieses in das Schäumwerkzeug 10 eingebracht wird.

Wie in Fig. 8a dargestellt, kann das zur Herstellung des Polyurethans nötige Polyol bereits im gewünschten Farbton eingefärbt sein. In diesem Fall wird das eingefärbte Polyol P.e. und die zusätzliche Komponente, die zur Herstellung von Polyurethan nötig ist, nämlich das aliphatische Isocyanat I, in einem Mischkopf M gemischt. Unmittelbar anschließend kommt es zum Materialaustrag von eingefärbtem Polyurethan PU.e. direkt in das Schäumwerkzeug 10 zur Durchführung des Verfahrensschritts h) des erfindungsgemäßen Verfahrens.

Bei der in Fig. 8b dargestellten Variante wird etwas vorgefärbtes Polyol P.v. in einem Mischblock MB mit Farbe F gemischt, um den gewünschten Farbton zu erhalten. Dieses Gemisch wird anschließend in einen Mischkopf M geleitet, in den auch die aliphatische Isocyanat-Komponente I eingeleitet wird. In diesem Mischkopf M entsteht dann - wie in der oben dargestellten Variante - das gewünschte, eingefärbte Polyurethan PU.e., welches dann unmittelbar in das Schäumwerkzeug 10 geführt wird.

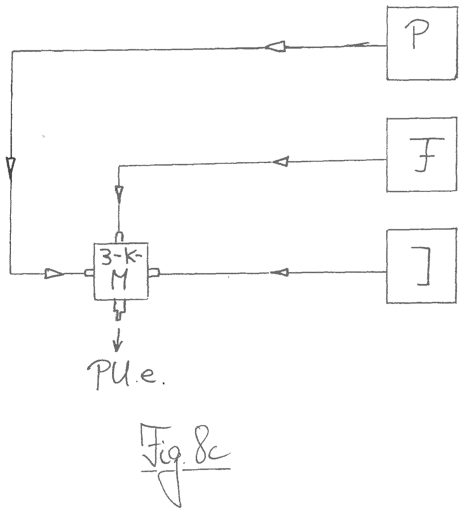

Fig. 8c zeigt schließlich eine Variante, bei welcher ungefärbtes Polyol P, Farbstoff F und aliphatisches Isocyanat I in den Drei-Komponenten-Mischkopf 3-K-M eingeleitet werden und dort homogen vermischt werden. Das fertige, eingefärbte Polyurethan PU.e. wird wie oben weiterverarbeitet.

## Patentansprüche

1. Verfahren zur Herstellung eines Dämmelements für die Herstellung von Rahmenteilen, umfassend folgende Schritte:
a) Bereitstellen eines zumindest zweiteiligen öffen- und schließbaren Formwerkzeugs (1) mit mindestens einem ersten Formteil (1a) und einem zweiten Formteil (1b), welche Formteile im geschlossenen Zustand des Formwerkzeugs einen Hohlraum (3) bilden und die dreidimensionale Außenform des Dämmelements wiedergeben, wobei die Formteile im geschlossenen Zustand des Formwerkzeugs miteinander verbunden und im geöffneten Zustand des Formwerkzeugs zumindest teilweise voneinander getrennt sind;
b) Anordnen mindestens eines flächenartigen Verstärkungselements (2a) am ersten Formteil (1a) und mindestens eines flächenartigen Verstärkungselements (2b) am zweiten Formteil (1b), wobei sich die flächenartigen Verstärkungselemente im geschlossenen Zustand des Formwerkzeugs im von den Formteilen gebildeten Hohlraum (3) befinden;
c) Einbringen einer fließfähigen, aushärtbaren Kunststoffmasse (4) in den durch die Formteile des Formwerkzeugs gebildeten Hohlraum (3);
d) Härtenlassen der Kunststoffmasse im Formwerkzeug;
e) Öffnen des Formwerkzeugs und Entnehmen des so gebildeten Dämmelements (5);
f) Anordnen von Abstandshaltern (6) am Dämmelement (5);
g) Einlegen des Dämmelements (5) in ein öffen- und schließbares Schäumwerkzeug (10), wobei die gesamte Oberfläche des Dämmelements durch die von ihm abragenden Abstandshalter (6) von Formflächen (12) des Schäumwerkzeugs (10) beabstandet gehalten wird;
h) Umfluten des Dämmelements (5) im geschlossenen Schäumwerkzeug (10) mit einer aushärtbaren Kunststoffmasse (14);
i) Aushärtenlassen der Kunststoffmasse im Schäumwerkzeug (10);
j) Öffnen des Schäumwerkzeugs und Entnehmen des nun ummantelten Dämmelements,
**dadurch gekennzeichnet, dass** es sich bei der aushärtbaren Kunststoffmasse (14) um eine mindestens einen Farbstoff enthaltende, im Wesentlichen UV-stabile Kunststoffmasse handelt.

2. Verfahren nach Anspruch 1, **dadurch gekennzeichnet, dass** es sich bei der aushärtbaren Kunststoffmasse (14) um eine nicht-aromatische und/oder aliphatische Kunststoffmasse, insbesondere um ein aliphatisches Polyurethan, welches vorzugsweise eine Dichte von ca. 800 - 1.200, besonders bevorzugt von ca. 1.000 kg/m³ aufweist, handelt.

3. Verfahren nach einem der Ansprüche 1 oder 2, **dadurch gekennzeichnet, dass** die aushärtbare Kunststoffmasse (14) durch UV-Strahlung gemäß Prüfnorm PV 3930 einen Farbabstand ΔE≤1 erfährt.

4. Verfahren nach einem der vorhergehenden Ansprüche, **dadurch gekennzeichnet, dass** es sich bei dem Farbstoff, welchen die aushärtbare Kunststoffmasse (14) enthält, um Farbpigmente, insbesondere um Titanoxid oder um eine Farbstoffmischung, welche Titanoxid enthält, handelt.

5. Verfahren nach einem der vorhergehenden Ansprüche, **dadurch gekennzeichnet, dass** die aushärtbare Kunststoffmasse (14) oder Komponenten der aushärtbaren Kunststoffmasse (14), wie z.B. Polyol und/oder Isocyanat, erst kurz vor dem Verfahrensschritt h) mit dem Farbstoff, insbesondere dem Farbpigment gemischt und unmittelbar danach in das geschlossene Schäumwerkzeug (10) zum Umfluten des Dämmelements (5) eingebracht wird bzw. werden.

6. Verfahren nach einem der vorhergehenden Ansprüche, **dadurch gekennzeichnet, dass** es sich bei der aushärtbaren Kunststoffmasse um Polyurethan handelt, wobei die Polyol-Komponente und die Isocyanat-Komponente zur Herstellung des Polyurethans vor dem Verfahrensschritt h) in einem Mischkopf, insbesondere in einem Dreikomponenten-Mischkopf gemischt werden, wobei
a) die Polyol-Komponente bereits mit der gewünschten Menge und der gewünschten Art von Farbstoff eingefärbt ist; oder
b) die Polyol-Komponente lediglich vorgefärbt ist und mit weiterem Farbstoff in einer Mischkammer gemischt wird, bevor das endgültig eingefärbte Polyol im Mischkopf mit der Isocyanat-Komponente gemischt wird; oder
c) die ungefärbte Polyol-Komponente, der gewünschte Farbstoff und die Isocyanat-Komponente zusammen im Mischkopf gemischt werden.

7. Verfahren nach einem der vorhergehenden Ansprüche, **dadurch gekennzeichnet, dass** die Schicht aus der mindestens einen Farbstoff enthaltenden aushärtbaren Kunststoffmasse (14) mit einer Schichtdicke von mindestens 3 mm um das Dämmelement (5) im Verfahrensschritt h) angeordnet wird.

8. Verfahren nach einem der vorhergehenden Ansprüche, **dadurch gekennzeichnet, dass** auch die Abstandshalter (6) denselben Farbton des Farbstoffes aufweisen, welcher auch der aushärtbaren Kunststoffmasse (14) zugesetzt wird.

9. Verfahren nach einem der vorhergehenden Ansprüche, **dadurch gekennzeichnet, dass** es sich bei den flächenartigen Verstärkungselementen um Matten (2a, 2b), Gewebe oder Gewirke handelt, wobei diese vorzugsweise aus Glasfasern gefertigt sind.

10. Verfahren nach Anspruch 9, **dadurch gekennzeichnet, dass** es sich bei den flächenartigen Verstärkungselementen um Glasfasermatten mit einem Gewicht von ca. 240 bis 360 g/m² handelt.

11. Verfahren nach einem der vorhergehenden Ansprüche, **dadurch gekennzeichnet, dass** es sich bei der fließfähigen, aushärtbaren Kunststoffmasse um Polyurethan (4), insbesondere um Polyurethan mit einer Schaumdichte von ca. 50 bis 150 kg, vorzugsweise ca. 70 kg/ m³ handelt, wobei der fertige Polyurethan-Schaum vorzugsweise einen mit expandiertem Polystyrol (z.B. Styropor^{®}) vergleichbaren U-Wert aufweist.

12. Verfahren nach einem der vorhergehenden Ansprüche, **dadurch gekennzeichnet, dass** die Abstandshalter in Schritt f) auf einen Randbereich des Dämmelements (5) aufgesteckt werden, ohne in das Dämmelement einzudringen, wobei die Abstandshalter vorzugsweise als Klammern (6) mit zwei flexiblen Klammerschenkeln (7a, 7b) und einem die Klammerschenkel verbindenden Verbindungsabschnitt (8) ausgebildet sind, wobei mindestens einer der beiden Klammerschenkel (7a, 7b) auf seiner Außenseite ein Beabstandungselement, vorzugsweise in Form einer Ausbuchtung (9a, 9b) oder Rippe, aufweist, wobei vorzugsweise auch der Verbindungsabschnitt (8) ein solches Beabstandungselement (9c) aufweist.

13. Verfahren nach einem der vorhergehenden Ansprüche, **dadurch gekennzeichnet, dass** das öffen- und schließbare Schäumwerkzeug (10) eine Abdruckform enthält, wobei die Abdruckform unlösbar am Schäumwerkzeug angeordnet oder lösbar mit diesem verbindbar ist.

## Claims

1. A method for producing an insulating element for the production of frame parts, the method comprising the following steps:
a) providing an at least two-part openable and closable molding tool (1) having at least one first mold part (1a) and one second mold part (1b), said mold parts, in the closed state of the molding tool, forming a cavity (3) and representing the three-dimensional outer shape of the insulating element, the mold parts being connected to each other in the closed state of the molding tool and at least partially separated from each other in the opened state of the molding tool;
b) disposing at least one sheet-like reinforcing element (2a) at the first mold part (1a) and at least one sheet-like reinforcing element (2b) at the second mold part (1b), in the closed state of the molding tool, the sheet-like reinforcing elements being located in the cavity (3) formed by the mold parts;
c) introducing a flowable, curable plastic mass (4) into the cavity (3) formed by the mold parts of the molding tool;
d) allowing the plastic mass to harden in the molding tool;
e) opening the molding tool and removing the insulating element (5) formed in such a manner;
f) disposing spacers (6) at the insulating element (5);
g) inserting the insulating element (5) into an openable and closeable foaming tool (10), the entire surface of the insulating element being kept at a distance from mold surfaces (12) of the foaming tool (10) by the spacers (6) projecting from said insulating element;
h) surrounding the insulating element (5) in the closed foaming tool (10) with a curable plastic mass (14);
i) allowing the plastic mass to cure in the foaming tool (10);
j) opening the foaming tool and removing the now sheathed insulating element,
**characterized in that** the curable plastic mass (14) is an essentially UV stable plastic mass containing at least one dye.

2. The method according to claim 1, **characterized in that** the curable plastic mass (14) is a non-aromatic and/or aliphatic plastic mass, in particular an aliphatic polyurethane which has preferably a density of approximately 800 to 1,200, especially preferably of approximately 1,000 kg/m³.

3. The method according to claim 1 or 2, **characterized in that** the curable plastic mass (14) undergoes a color difference ΔE≤1 due to UV radiation according to test standard PV 3930.

4. The method according to any one of the preceding claims, **characterized in that** the dye which is contained in the curable plastic mass (14) is color pigments, in particular titanium oxide or a dye mixture containing titanium oxide.

5. The method according to any one of the preceding claims, **characterized in that** the curable plastic mass (14) or components of the curable plastic mass (14), such as polyol and/or isocyanate, is/are mixed with the dye, in particular the color pigment, only shortly before method step h) and is/are introduced immediately afterward into the closed foaming tool (10) for surrounding the insulating element (5).

6. The method according to any one of the preceding claims, **characterized in that** the curable plastic mass is polyurethane, the polyol component and the isocyanate component for producing the polyurethane being mixed in a mixing head, in particular a three-component mixing head, before method step h),
a) the polyol component being already dyed with the desired amount and the desired type of dye; or
b) the polyol component being only pre-dyed and being mixed with further dye in a mixing chamber before the finally dyed polyol is mixed with the isocyanate component in the mixing head; or
c) the undyed polyol component, the desired dye and the isocyanate component together being mixed in the mixing head.

7. The method according to any one of the preceding claims, **characterized in that** the layer of the curable plastic mass (14) containing at least one dye is disposed with a layer thickness of at least 3 mm around the insulating element (5) in method step h).

8. The method according to any one of the preceding claims, **characterized in that** also the spacers (6) have the same hue of the dye which is also added to the curable plastic mass (14).

9. The method according to any one of the preceding claims, **characterized in that** the sheet-like reinforcing elements are mats (2a, 2b), woven fabric or knitted fabric, wherein these are made preferably of glass fibers.

10. The method according to claim 9, **characterized in that** the sheet-like reinforcing elements are glass fiber mats having a weight of approximately 240 to 360 g/m².

11. The method according to any one of the preceding claims, **characterized in that** the flowable, curable plastic mass is polyurethane (4), in particular polyurethane having a foam density of approximately 50 to 150 kg/m³, preferably approximately 70 kg/m³, the finished polyurethane foam preferably having a U-value comparable to expanded polystyrene (e.g. Styropor^{®}).

12. The method according to any one of the preceding claims, **characterized in that** the spacers are placed on an edge region of the insulating element (5) in step f) without penetrating into the insulating element, the spacers being realized preferably as clips (6) having two flexible clip legs (7a, 7b) and a connecting portion (8) connecting the clip legs, at least one of the two clip legs (7a, 7b) having on its outer side a spacing element, preferably in the form of a bulge (9a, 8b) or rib, preferably also the connecting portion (8) having such a spacing element (9c).

13. The method according to any one of the preceding claims, **characterized in that** the openable and closeable foaming tool (10) contains an impression mold, the impression mold being disposed non-detachably at the foaming tool or being connectable to said foaming tool.

## Revendications

1. Procédé pour produire un élément isolant pour la production de parties de châssis, le procédé comprenant les étapes suivantes :
a) fournir un outil de moulage (1) qui est au moins en deux parties et capable d'être ouvert et fermé et qui a au moins une première partie de moule (1a) et une deuxième partie de moule (1b), lesdites parties de moule, dans l'état fermé de l'outil de moulage, formant une cavité (3) et représentant la forme extérieure tridimensionnelle de l'élément isolant, les parties de moule étant reliées l'une à l'autre dans l'état fermé de l'outil de moulage et étant au moins partiellement séparées l'une de l'autre dans l'état ouvert de l'outil de moulage ;
b) disposer au moins un élément (2a) de renfort de type nappe sur la première partie de moule (1a) et au moins un élément (2b) de renfort de type nappe sur la deuxième partie de moule (1b), dans l'état fermé de l'outil de moulage, les éléments de renfort de type nappe étant situés dans la cavité (3) formée par les parties de moule ;
c) introduire une masse plastique (4) coulante et capable d'être cuite dans la cavité (3) formée par les parties de moule de l'outil de moulage ;
d) laisser durcir la masse plastique dans l'outil de moulage ;
e) ouvrir l'outil de moulage et enlever l'élément isolant (5) formé de cette manière ;
f) disposer des entretoises (6) sur l'élément isolant (5) ;
g) insérer l'élément isolant (5) dans un outil de moussage (10) qui est capable d'être ouvert et fermé, toute la surface de l'élément isolant est maintenue à distance de surfaces de moule (12) de l'outil de moussage (10) par les entretoises (6) faisant saillie dudit élément isolant ;
h) enrober l'élément isolant (5) dans l'outil de moussage (10) d'une masse plastique (14) capable d'être cuite ;
i) laisser cuire la masse plastique dans l'outil de moussage (10) ;
j) ouvrir l'outil de moussage et enlever l'élément isolant qui est maintenant enveloppé,
**caractérisé en ce que** la masse plastique (14) capable d'être cuite est une masse plastique qui contient au moins un colorant et est essentiellement stable aux UV.

2. Procédé selon la revendication 1, **caractérisé en ce que** la masse plastique (14) capable d'être cuite est une masse plastique non aromatique et/ou aliphatique, notamment un polyuréthane aliphatique qui, de préférence, a une densité d'environ 800 à 1.200, de préférence particulière, d'environ 1.000 kg/m³.

3. Procédé selon la revendication 1 ou 2, **caractérisé en ce que** la masse plastique (14) capable d'être cuite subit un écart de couleur ΔE≤1 dû au rayonnement UV selon la norme d'essai PV 3930.

4. Procédé selon l'une quelconque des revendications précédentes, **caractérisé en ce que** le colorant qui est contenu dans la masse plastique (14) capable d'être cuite est des pigments de couleur, notamment de l'oxyde de titane ou un mélange de colorants contenant de l'oxyde de titane.

5. Procédé selon l'une quelconque des revendications précédentes, **caractérisé en ce que** la masse plastique (14) capable d'être cuite ou des composants de la masse plastique (14) capable d'être cuite, tels que le polyol et/ou l'isocyanate, n'est mélangée/ne sont mélangés avec le colorant, notamment le pigment de couleur, que peu avant l'étape de procédé h) et est introduite/sont introduits immédiatement après dans l'outil de moussage (10) fermé pour enrober l'élément isolant (5).

6. Procédé selon l'une quelconque des revendications précédentes, **caractérisé en ce que** la masse plastique capable d'être cuite est du polyuréthane, le composant polyol et le composant isocyanate pour la production du polyuréthane étant mélangés dans une tête de mélange, notamment dans une tête de mélange à trois composants, avant l'étape de procédé h),
a) le composant polyol étant déjà teint avec la quantité souhaitée et le type souhaité de colorant ; ou
b) le composant polyol étant seulement pré-teint et étant mélangé avec un autre colorant dans une chambre de mélange avant que le polyol définitivement teint soit mélangé avec le composant isocyanate dans la tête de mélange ; ou
c) le composant polyol non teint, le colorant souhaité et le composant isocyanate étant mélanges conjointement dans la tête de mélange.

7. Procédé selon l'une quelconque des revendications précédentes, **caractérisé en ce que** la couche de la masse plastique (14) capable d'être cuite contenant au moins un colorant est disposée avec une épaisseur de couche d'au moins 3 mm autour de l'élément isolant (5) dans l'étape de procédé h).

8. Procédé selon l'une quelconque des revendications précédentes, **caractérisé en ce que** les entretoises (6), également, ont la même teinte du colorant qui est aussi ajoutée à la masse plastique (14) capable d'être cuite.

9. Procédé selon l'une quelconque des revendications précédentes, **caractérisé en ce que** les éléments de renfort de type nappe sont des mats (2a, 2b), des tissus ou des tricots, dans lequel ceux-ci sont fabriqués de fibres de verre.

10. Procédé selon la revendication 9, **caractérisé en ce que** les éléments de renfort de type nappe sont des mats de fibres de verre ayant un poids d'environ 240 à 360 g/m².

11. Procédé selon l'une quelconque des revendications précédentes, **caractérisé en ce que** la masse plastique coulante et capable d'être cuite est du polyuréthane (4), notamment du polyuréthane ayant une densité de mousse d'environ 50 à 150 kg/m³, de préférence d'environ 70 kg/m³, la mousse de polyuréthane finie, de préférence, ayant une valeur U comparable à du polystyrène expansé (p. ex. Styropor^{®}).

12. Procédé selon l'une quelconque des revendications précédentes, **caractérisé en ce que** les entretoises sont fixées sur une zone de bord de l'élément isolant (5) dans l'étape f) sans pénétrer dans l'élément isolant, les entretoises étant réalisées, de préférence, comme pinces (6) ayant deux branches de pince (7a, 7b) flexibles et une partie de liaison (8) reliant les branches de pince, au moins une des deux branches de pince (7a, 7b) ayant un élément d'espacement, de préférence sous la forme d'un renflement (9a, 9b) ou d'une nervure, sur son côté extérieur, de préférence, aussi la partie de liaison (8) ayant un tel élément d'espacement (9c).

13. Procédé selon l'une quelconque des revendications précédentes, **caractérisé en ce que** l'outil de moussage (10) qui est capable d'être ouvert et fermé contient un moule d'empreinte, le moule d'empreinte étant disposé de manière inamovible sur l'outil de moussage ou étant capable d'être relié à celui-ci de manière amovible.
